Europäisches Patentamt

European Patent Office

Office européen des brevets

(19)

(11) Numéro de publication : **0 072 309**
**B1**

(12) # FASCICULE DE BREVET EUROPÉEN

(45) Date de publication du fascicule du brevet :
**05.04.89**

(21) Numéro de dépôt : **82401449.2**

(22) Date de dépôt : **02.08.82**

(51) Int. Cl.⁴ : **A 01 J 25/13**

(54) **Perfectionnements aux habillages de moules à fromage du type à fond suspendu mobile.**

(30) Priorité : **10.08.81 FR 8115661**

(43) Date de publication de la demande :
**16.02.83 Bulletin 83/07**

(45) Mention de la délivrance du brevet :
**05.04.89 Bulletin 89/14**

(84) Etats contractants désignés :
**AT BE CH DE GB IT LI LU NL SE**

(56) Documents cités :
**FR-A- 1 339 247**
**FR-A- 2 224 082**
**FR-A- 2 293 874**
**FR-A- 2 308 307**

(73) Titulaire : **Société S.E.R.A.M.A.C. S.A.R.L.**

**F-63210 Olby (FR)**

(72) Inventeur : **Chanet, Jean**
**115 rue Fontgiève**
**F-63000 Clermont Ferrahd (FR)**

(74) Mandataire : **Chanet, Jacques**
**B.P. 27 95bis avenue de Royat**
**F-63400 Chamalières (FR)**

Jouve, 18, rue St-Denis, 75001 Paris, France

EP 0 072 309 B1

## Description

La présente invention est du domaine de la fabrication des fromages, plus particulièrement des fromages dits à pâte pressée, et elle a pour objet des perfectionnements à l'élément d'essorage dit encore toile, destiné d'une manière générale à équiper les moules servant au pressage des fromages.

On connaît, notamment par un Brevet Français 1 339247, l'art d'équiper de façon plus ou moins permanente les moules à fromage d'un élément d'essorage ; dans le dispositif décrit dans ce Brevet, l'élément d'essorage est une toile rigide en forme de poche qui tapisse l'intérieur du moule ; les moules à fromage revêtus d'un tel équipement sont du type dit à « toile fixe ».

On connaît de façon plus récente, par une demande de Brevet Français FR-A-2 293 874 l'art de suspendre un « fond » revêtu d'une toile d'essorage, dans une poche souple pendant à l'intérieur du moule ; les moules à fromage revêtu d'un tel équipement d'essorage sont du type dit à « toile fixe à fond suspendu ».

On connaît, de façon encore plus récente, par une demande de Brevet Français FR-A-2 308 307 du même présent Demandeur, l'art et la manière de suspendre de façon mobile un fond rigide par l'intermédiaire d'une poche en toile souple ; dans ce type d'élément d'essorage de moules à fromage dits à « fond suspendu mobile », une toile en forme de poche cylindrique destinée à pendre dans le moule descend depuis le bord supérieur du moule jusqu'au voisinage du bord inférieur, puis passe d'abord au-dessous du rebord du fond mobile, dit aussi armature, puis revient au-dessus de ladite armature pour la recouvrir, ladite toile étant embrassée au-dessous du bord de ladite armature par un élément élastique ayant la forme d'un tendeur torique.

C'est plus précisément à ce dernier type d'habillage, ou encore d'équipement ou d'élément d'essorage, que s'adressent les perfectionnements apportés par la présente invention. En effet, les dispositifs du troisième type précité, bien qu'ayant apporté, pour certaines fabrications fromagères, de réelles améliorations dans l'utilisation des moules à fromage, ont néanmoins révélé, lors des essais, de substantiels inconvénients.

Ainsi, par exemple, dans l'une des versions de réalisation de la troisième Demande de Brevet précitée, le tendeur torique passe dans des passants ou dans un ourlet de la poche, grâce à quoi le fond de la poche est toujours maintenu tendu sur l'armature ; mais si pour une quelconque raison, le tendeur vient à se rompre, il n'est pas possible de le remplacer de façon simple par un tendeur en bon état ; cette réalisation, par ailleurs coûteuse à la fabrication, a été écartée très tôt.

Par exemple encore, dans l'autre version, le tendeur torique embrasse simplement la poche au-dessous de l'armature ; cette réalisation s'est avérée très avantageuse du point de vue du coût de fabrication et des facilités d'échange du tendeur en cas de rupture de celui-ci ; mais elle a présenté, lors de l'utilisation, l'inconvénient de ne pas maintenir sous tension constante le fond circulaire de la poche au-dessus de l'armature ; en effet, pour que cette condition soit réalisée, la tension du tendeur doit être telle que pratiquement l'armature se trouve, en position de repos, au voisinage du bord supérieur du moule ; il en résulte lors du passage de l'armature du bord supérieur au bord inférieur sous le poids du fromage ou de la pression exercée, une usure importante de la toile sur les bords de l'armature notamment.

Il est apparu au Demandeur que le tendeur, ainsi disposé, remplissait simultanément deux fonctions, à savoir : assurer la tension du fond de la poche sur l'armature et assurer la tension de la poche le long des parois. Or, il lui est aussi apparu que ces tensions, pour être suffisantes, ne devaient pas être de même grandeur ; ainsi une tension beaucoup plus forte est nécessaire pour maintenir le fond de la poche tendu sur l'armature, que celle nécessaire à maintenir tendues les parois de la poche contre les parois du moule.

D'autres inconvénients résultaient de la présence du tendeur torique : le risque de perte de celui-ci lors des opérations de lavage ; le risque de cassure ; la surépaisseur qu'il constitue au fond du moule.

La présente invention propose de remédier aux inconvénients précités en dissociant les deux fonctions du tendeur et en les faisant assumer chacune par un élément approprié.

Selon la présente invention un élément d'essorage de moule à fromage du type à fond, ou armature, suspendu mobile, dans lequel une poche en toile de forme cylindrique destinée à pendre dans le moule descend depuis le bord supérieur du moule jusqu'au voisinage du bord inférieur et passe au-dessous du rebord de l'armature mobile puis revient au-dessus de ladite armature pour la recouvrir, est caractérisé en ce qu'il comporte un premier élément élastique en forme de ruban plat cousu tendu à la toile de la poche de manière à enserrer celle-ci au-dessous de l'armature lorsque cette dernière est en position sous le fond de la poche, la fonction de ce ruban élastique étant d'assurer la tension du fond sur l'armature et en ce qu'il comporte en outre un second élément élastique enserrant la toile, entre le ruban plat et le bord de la poche et dont la fonction est d'assurer la tension de la partie cylindrique de la poche le long de la paroi du moule, d'où il résulte que le fond de la poche est constamment tendu sur l'armature suspendue, d'où il résulte aussi que l'élément élastique est une partie intégrante et stable de la poche et qu'il ne risque plus de s'en détacher et de se perdre.

Le second élément élastique est conformé pour exercer une tension beaucoup plus faible que le premier. Ce second élément élastique peut être un ruban élastique plat cousu sur la toile ou encore être constitué par une pluralité de tours de fil élastique passés entre les fils de la toile ou encore être constitué par une zone annulaire de la toile enduite d'élastomère, ou enfin être constitué à la manière des dispositifs de l'art antérieur par un tendeur torique mais celui-ci étant de très faible diamètre, par exemple un à deux millimètres.

De préférence enfin, un élément d'essorage conforme à la présente invention comporte un bracelet inextensible embrassant la toile au-dessous de l'armature à la manière des tendeurs précités, le diamètre, ou encore la longueur périphérique de ce bracelet, étant légèrement inférieur au diamètre intérieur (d i) du premier élément élastique tendu sur l'armature. Ce bracelet inextensible a pour fonction d'arrêter vers le bas la course de l'armature dans le moule.

La présente invention sera mieux comprise et des détails en relevant apparaîtront à la description qui va être faite d'une part, et sommairement, d'un dispositif de l'art antérieur dont la présente invention constitue des perfectionnements et d'autre part, d'une forme de réalisation, en relation avec les figures des planches annexées, dans lesquelles :

- la fig. 1 est une représentation en coupe d'un élément d'essorage de l'invention avec sur la partie gauche de la figure cet élément sorti du moule poussé vers le haut et sur la partie droite cet élément pendant à l'intérieur du moule,

- la fig. 2 est une vue partielle de dessous suivant la flèche A de la fig. 1,

- la fig. 2a est une coupe partielle schématique d'un détail de la fig. 2, et

- la fig. 3 est une vue en élévation d'un élément d'essorage de l'art antérieur, poche poussée vers le haut,

- la fig. 4 est une représentation analogue à celle de la fig. 3 d'un élément d'essorage comportant les présents perfectionnements.

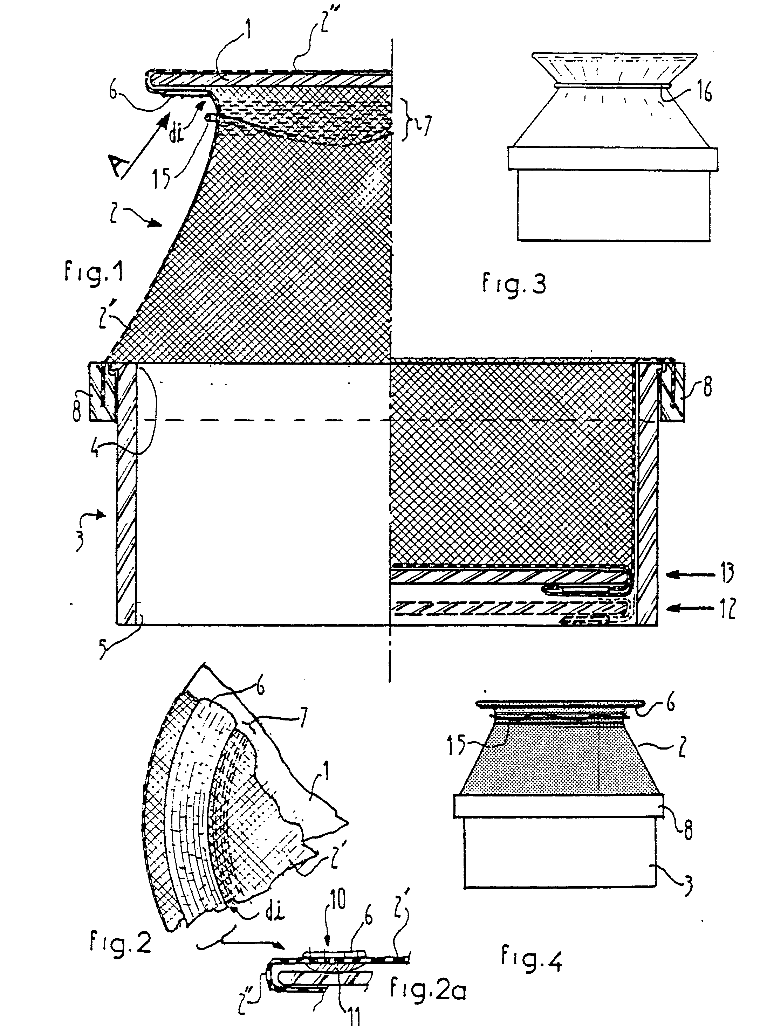

Sur la fig. 1 un moule à fromage cylindrique 3 comporte fixé de façon plus ou moins permanente à son bord supérieur 4, un élément d'essorage de l'invention ; cet élément d'essorage est constitué d'une poche 2 à paroi cylindrique et à fond circulaire et d'une armature 1 consistant en un disque rigide de diamètre légèrement inférieur au diamètre intérieur de la carcasse du moule 3 ; l'armature est située au-dessous du fond circulaire de la poche.

Sur la partie gauche de la figure l'élément d'essorage est sorti du moule poussé vers le haut tandis que sur la partie droite, il pend à l'intérieur du moule ; cette dernière position est sa position normale d'utilisation ; dans la position normale d'utilisation, il apparaît que la paroi cylindrique de la poche 2 descend depuis le bord supérieur 4 du moule contre lequel elle est maintenue par un ceinture élastique 8, jusqu'au voisinage du bord inférieur 5 de celui-ci, puis passe au-dessous de l'armature mobile, puis revient au-dessus de cette armature pour la recouvrir de son fond circulaire ; la toile est embrassée au-dessous du bord de l'armature par un élément élastique. Pour la compréhension du fonctionnement d'un élément d'essorage à fond suspendu mobile, on se reportera avantageusement à la troisième Demande de Brevet citée dans le préambule.

Selon la présente invention, cet élément cylindrique qui est dans le cas de la figure un ruban élastique plat 6 est fixé, par couture par exemple, et de façon tendue à la toile 2 ; il est fixé sur la toile en une position qui le situe au-dessous de l'armature 1, lorsque celle-ci est en position sous la poche, et de préférence au voisinage de la périphérie de l'armature.

Cette position dans laquelle est cousu le ruban élastique plat est encore mieux visible sur la fig. 2 ou il apparaît que l'élément élastique a une forme de couronne circulaire dont le diamètre extérieur est inférieur de quelques millimètres au diamètre extérieur de l'armature. Cet élément élastique 6 que caractérise essentiellement l'invention, est fait d'un ruban élastique rabouté, par couture par exemple, de longueur développée très nettement inférieure au périmètre de l'armature ; puis il est cousu tendu par la couturière sur la poche dans la position adéquate. Lorsque l'armature est introduite sous la poche, cette introduction entraîne une forte tension de l'élastique qui restera permanente et de ce fait le fond de la poche sera tendu de façon permanente et forte sur l'armature.

Dans une forme pratique de réalisation, la poche 2 est réalisée par couture de son fond circulaire sur sa partie cylindrique et, comme cela est représenté sur le détail schématique de la fig. 2a, le ruban 6 peut servir d'élément de jonction entre les parties 2' et 2" de la poche cousue sur lui. Accessoirement une couche d'élastomère 11 peut être disposée à la jonction 10 des parties cousues à l'opposé de l'élastique par rapport à la toile.

Revenant aux fig. 1 et 2, un second élément élastique est constitué par une zone 7 de la toile (partie cylindrique de la poche enduite d'élastomère). Comme déjà dit, ce second élément élastique n'a pour seule fonction que de tendre, par l'intermédiaire de l'armature, la poche le long des parois intérieures du moule en position normale d'utilisation et de manière à éviter les plis de toile qui pourraient marquer le fromage. Il s'agit donc d'une tension très faible dont le seul effet apparent qui est un effet suffisant est d'entraîner le relèvement de l'armature d'une position basse en butée 12 jusqu'à une position légèrement plus haute 13 d'environ 1 à 2 centimètres au-dessus de la première.

On remarque encore notamment sur la fig. 1 partie gauche un bracelet inextensible 15 embrassant la toile au-dessous de l'armature : la longueur développée de ce bracelet est légèrement inférieure au diamètre inférieur di du ruban élastique tendu sur l'armature. La fonction de ce bracelet est d'arrêter la course de l'armature dans le moule, dans une position légèrement inférieure à la position 12 de butée, ce qui a pour effet d'éviter que le poids du fromage n'entraîne le ruban élastique 6 à passer au-dessus de l'armature. Cette disposition sera principalement utilisée pour les moules à fromage d'assez grand diamètre, par exemple égal ou supérieur à 30 centimètres.

On notera aussi que l'inextensibilité du bracelet doit s'entendre comme la propriété de celui-ci à ne pas s'allonger au-delà d'une certaine limite correspondant à la position sus-indiquée. Toutefois ce bracelet pourra lui-même, s'il est constitué d'une partie non élastique et d'une partie élastique, par exemple corde élastique enrobée dans une tresse non élastique, remplir la fonction de second élément élastique.

Sur la fig. 3, apparaît dans son aspect extérieur caractéristique, un habillage conforme à la troisième référence à l'art antérieur ; on n'y reconnaît nettement un tendeur torique 16 embrassant la toile au-dessous de l'armature. Pour passer de la position représentée sur la figure qui est celle, au sens inverse près, qui se présente lors de l'extraction du fromage, à la position de repos qui est celle dans laquelle l'habillage pend à l'intérieur du moule, l'habillage va passer dans une position dans laquelle le tendeur ne sera plus sous tension ; dès lors, il risquera de passer, ainsi que les coutures de la toile au-dessus de l'armature. Dans la position où est représenté ce moule équipé de son habillage, l'habillage est sorti du moule poussé vers le haut, par exemple par une pression de la main passant à l'intérieur du moule de bas en haut ; il pourrait encore apparaître de façon semblable mais inversé en retournant le moule et en laissant pendre l'habillage. Dans la version représentée, le tendeur 16 n'est pas fixe sur la toile et la position qu'il occupe sur la figure est une position d'équilibre sous l'effet de sa tension.

Sur la fig. 4, on a représenté un moule équipé d'un habillage comportant les présents perfectionnements dans une situation analogue à celle de la figure précédente ; il y apparaît de façon caractéristique que le ruban élastique 6 plaque l'extrémité de la partie cylindrique de la poche contre l'armature ; est également caractéristique l'aspect de tronc de cône lié aux perfectionnements comparés de bicône de la figure précédente. Lors de l'utilisation, un habillage de la fig. 4 présentera un fond mobile pendant plus naturellement dans le moule et emprisonnant de façon beaucoup plus ferme son armature évitant le risque de relâchement de cette dernière et du passage des coutures et/ou du tendeur au-dessus de l'armature.

**Revendications**

1. Elément d'essorage de moule à fromage du type à fond ou armature (1) suspendu mobile, dans lequel une poche (2) en toile de forme cylindrique destinée à pendre dans le moule (3) descend depuis le bord supérieur (4) du moule jusqu'au voisinage du bord inférieur (5) et passe au-dessous du rebord de l'armature mobile puis revient au-dessus de ladite armature pour la recouvrir, caractérisé : en ce qu'il comporte un premier élément élastique (6) en forme de ruban plat cousu tendu à la toile de la poche de manière à enserrer celle-ci au-dessous de l'armature (1) lorsque cette dernière est en position sous le fond de la poche (2), la fonction de ce ruban élastique (6) étant d'assurer la tension du fond (2″) sur l'armature, et en ce qu'il comporte en outre un second élément élastique (7) enserrant la toile entre le ruban plat (6) et le bord de la poche et dont la fonction est d'assurer la tension de la partie cylindrique de la poche le long de la paroi du moule.

2. Elément d'essorage selon la revendication 1, caractérisé en ce que ledit ruban plat (6) cousu sert d'élément de jonction entre la partie cylindrique (2′) de ladite poche et la partie (2″) constituant son fond.

3. Elément d'essorage selon la revendication 1 caractérisé en ce qu'une couche d'élastomère (11) est disposée à la jonction (10) des parties de la poche, du côté opposé audit ruban élastique (6).

4. Elément d'essorage selon la revendication 1, caractérisé en ce qu'il comporte en outre un bracelet inextensible (15) embrassant la toile au-dessous de l'armature.

**Claims**

1. Cheese-mould drainage element of the type with a movably suspended bottom or reinforcement (1), in which a cloth pouch (2) of cylindrical shape intended for hanging in the mould (3) descends from the upper edge (4) of the mould to the vicinity of the lower edge (5), passes underneath the rim of the movable reinforcement and then returns above the said reinforcement in order to cover it, characterized in that it possesses a first elastic element (6) in the form of a flat strip sewn under tension to the cloth of the pouch so as to grip this underneath the reinforcement (1) when the latter is in position under the bottom of the pouch (2), the function of this elastic strip (6) being to ensure the tensioning of the bottom (2″) against the reinforcement, and in that it also possesses a second elastic element (7) which grips the cloth between the flat strip (6) and the edge of the pouch and the function of which is to ensure the tensioning of the cylindrical part of the pouch along the wall of the mould.

2. Drainage element according to Claim 1, characterized in that the said sewn flat strip (6) serves as a joining element between the cylindrical part (2′) of the said pouch and the part (2″) forming its bottom.

3. Drainage element according to claim 1, characterized in that a layer of elastomer (11) is arranged at the junction (10) of the parts of the pouch on the side opposite the said elastic strip (6).

4. Drainage element according to Claim 1, characterized in that it also possesses a non-stretchable band (15) surrounding the cloth below the reinforcement.

## Patentansprüche

1. Entwässerungselement für eine Form für Käse in der Bauart mit einem Boden oder Rahmen (1), der beweglich aufgehängt ist, in dem ein Beutel aus Tuch, der zylindrisch ausgebildet ist und in der Form (3) hängt, von dem oberen Rand (4) von der Form bis in die Nähe des unteren Rands (5) fällt, unter der Kante des beweglichen Rahmens geführt ist und über den besagten Rahmen zurückkommt, um ihn abzudecken, dadurch gekennzeichnet,
daß das Entwässerungselement einen ersten elastischen Teil (6) enthält, der als ein flaches Band ausgeführt ist, das gespannt an dem Tuch des Beutels derart genäht ist, um den Beutel oberhalb des Rahmens (1) zu umfassen, wenn der Rahmen in Position unter dem Boden des Beutels (2) ist, wobei das elastische Band den Zweck hat, die Spannung des Bodens (2") auf dem Rahmen sicherzustellen und
dadurch gekennzeichnet, daß das Entwässerungselement außerdem einen zweiten elastischen Teil (7) enthält, der das Tuch zwischen dem flachen Band (6) und dem Rand des Beutels einschließt, wobei dieser zweite elastische Teil (7) den Zweck hat, die Spannung von dem zylindrischen Teil des Beutels entlang der Wandung von der Form sicherzustellen.

2. Entwässerungselement gemäß Anspruch 1, dadurch gekennzeichnet, daß das genähte flache Band (6) als Verbindungselement zwischen dem zylindrischen Teil (2') des Beutels und dem Teil (2"), der den Boden des Beutels bildet, dient.

3. Entwässerungselement gemäß Anspruch 1, dadurch gekennzeichnet, daß eine Schicht von Elastomer (11) an der Verbindung (10) der Bestandteile des Beutels auf der Seite gegenüber dem elastischen Band (6) angebracht ist.

4. Entwässerungselement gemäß dem Anspruch 1, dadurch gekennzeichnet, daß es außerdem einen nicht dehnbaren Ring (15) enthält, der das Tuch oberhalb des Rahmens umschließt.

fig.1

fig.3

fig.2

fig.2a

fig.4